# EUROPEAN PATENT APPLICATION

(11) **EP 2 337 248 A2**
(43) Date of publication of application: **22.06.2011**
(21) Application number: 10157603.1
(22) Date of filing: 24.03.2010
(51) Int. Cl.: H04H 60/00

(54) **Method of processing analog broadcasting signal and broadcasting signal receiving apparatus**

(30) Priority: 04.11.2009 KR 20090105979
(71) Applicant: Samsung Electronics Co., Ltd., Suwon-si, Gyeonggi-do (KR)
(72) Inventor: Kim, Joon-soo, Seoul (KR); Kim, Se-jun, Suwon-si Gyeonggi-do (KR)
(74) Representative: Walaski, Jan Filip

(57) **Abstract**

A method and apparatus for processing an analog broadcasting signal in an analog broadcasting signal receiving apparatus. The method of processing the analog broadcasting signal includes determining broadcasting system modes of all broadcasting channels on the basis of a vertical synchronization signal of an intermediate frequency (IF) broadcasting signal, and using the broadcasting system mode information generated according to the determination result in a video processor when performing a channel scan, thereby shortening the time to perform the channel scan.

## Description

The present invention relates to a method and apparatus for processing an analog broadcasting signal in an analog broadcasting signal receiving apparatus.

Many areas and nations use analog televisions (TVs) having different standard broadcasting systems. For example, America, Korea, and Japan use a national television system commission (NTSC) system, and Europe uses a sequentiel couleur a memoire (SECAM) system and a phase alternation by line (PAL) system. Also, each of the systems is specifically divided into a BG, DK, I, L, or MN system according to an intermediate frequency (IF) transmission standard.

All the systems, except for the L system, have a negative video polarity. Accordingly, TVs generally processing an analog broadcasting signal need to perform an additional channel scan to detect L system channels when performing a channel search.

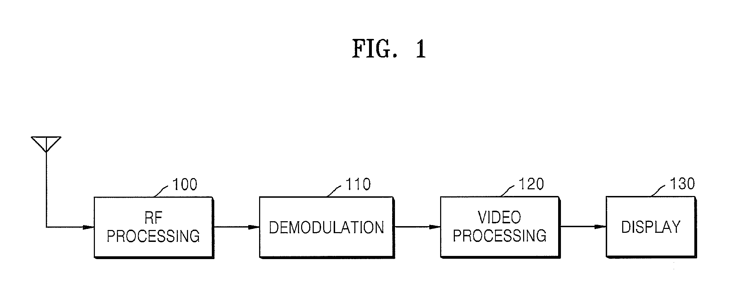

FIG. 1 is a block diagram for describing processing of a broadcasting signal received in a general broadcasting signal receiving apparatus.

In a block 100, a received radio frequency (RF) broadcasting signal is frequency-converted to output an IF broadcasting signal.

In a block 110, the IF broadcasting signal is filtered and demodulated to output a baseband broadcasting signal.

In a block 120, the baseband broadcasting signal is decoded and output.

In a block 130, the decoded broadcasting signal is displayed.

In general, when TVs search channels, a video processor performing the block 120 sets a video polarity as negative, scans all of the channels, and changes the video polarity to positive, and then repeats the same channel scan. Accordingly, general analog TVs require a long channel search time.

The present invention provides a method and apparatus for effectively processing an analog broadcasting signal in an analog broadcasting signal receiving apparatus.

According to an aspect of the present invention, there is provided a method of processing an analog broadcasting signal, performed by a broadcasting signal receiving apparatus, the method including; determining broadcasting system modes of all broadcasting channels existing in a predetermined frequency band, on the basis of an intermediate frequency (IF) broadcasting signal that is frequency-converted from a radio frequency (RF) broadcasting signal; generating broadcasting system mode information showing the broadcasting system modes with respect to the broadcasting channels according to a result of the determining; and decoding a baseband broadcasting signal with reference to the generated broadcasting system mode information.

The broadcasting system mode information may show that a vertical synchronization signal having a positive polarity is included in the IF broadcasting signal, a vertical synchronization signal having a negative polarity is included in the IF broadcasting signal, or a vertical synchronization signal is not included in the IF broadcasting signal.

The determining of the broadcasting system modes may include determining the broadcasting system modes with respect to the broadcasting channels according to a polarity of the vertical synchronization signal included in the IF broadcasting signal. The determining of the broadcasting system modes may include determining that when the vertical synchronization signal included in the IF broadcasting signal is negative, the broadcasting system mode is an L type.

The method of processing the analog broadcasting signal may further include generating a channel map with respect to the broadcasting channels by using the broadcasting system mode information and additional information that is obtained as a result of the decoding.

According to another aspect of the present invention, there is provided a broadcasting signal receiving apparatus for processing an analog broadcasting signal, the apparatus including: a determining unit for determining broadcasting system modes of all broadcasting channels existing in a predetermined frequency band, on the basis of an IF broadcasting signal that is frequency-converted from an RF broadcasting signal; a generating unit for generating broadcasting system mode information showing the broadcasting system modes with respect to the broadcasting channels according to a result of the determining; and a decoding unit for decoding a baseband broadcasting signal with reference to the generated broadcasting system mode information.

The broadcasting system mode information may show that a vertical synchronization signal having a positive polarity is included in the IF broadcasting signal, a vertical synchronization signal having a negative polarity is included in the IF broadcasting signal, or a vertical synchronization signal is not included in the IF broadcasting signal.

The determining unit may determine the broadcasting system modes with respect to the broadcasting channels according to a polarity of the vertical synchronization signal included in the IF broadcasting signal.

The determining unit may determine that when the vertical synchronization signal included in the IF broadcasting signal is negative, the broadcasting system mode is an L type.

The apparatus may further include a channel map generating unit generating a channel map with respect to the broadcasting channels by using the broadcasting system mode information and additional information that is obtained as a result of the decoding. According to another aspect of the present invention, there is provided a computer readable recording medium having embodied thereon a computer program for executing the method of processing the analog broadcasting signal.

The above and other features and advantages of the present invention will become more apparent by describing in detail exemplary embodiments thereof with reference to the attached drawings in which:
FIG. 1 is a block diagram for describing processing of a broadcasting signal received in a general broadcasting signal receiving apparatus;
FIG. 2 is a flowchart for describing processing of a received broadcasting signal, according to an embodiment of the present invention;
FIG. 3 is a flowchart for describing a process of determining broadcasting system modes of all broadcasting channels, according to an embodiment of the present invention;
FIG. 4A is a graph illustrating a vertical synchronization signal pattern of a sequentiel couleur a memoire (SECAM)-L broadcasting signal, according to an embodiment of the present invention;
FIG. 4B is a graph illustrating a vertical synchronization signal pattern of a phase alternation by line (PAL)-BG broadcasting signal, according to an embodiment of the present invention; and
FIG. 5 is a block diagram illustrating a structure of a broadcasting signal receiving apparatus, according to an embodiment of the present invention.

Now, exemplary embodiments according to the present invention will be described in detail with reference to the accompanying drawings.

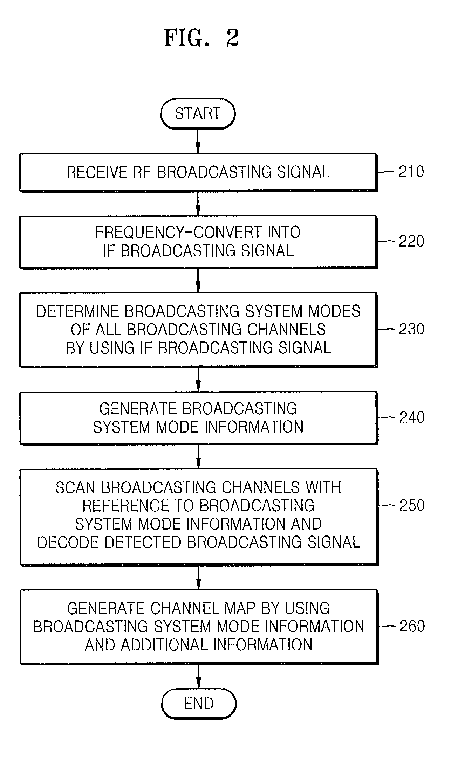

FIG. 2 is a flowchart for describing processing of a received broadcasting signal, according to an embodiment of the present invention.

In operation 210, a broadcasting signal receiving apparatus receives a radio frequency (RF) broadcasting signal.

In operation 220, the received RF broadcasting signal is frequency-converted into an intermediate frequency (IF) broadcasting signal.

In operation 230, the broadcasting signal receiving apparatus determines broadcasting system modes of all broadcasting channels by using the IF broadcasting signal.

In operation 240, the broadcasting signal receiving apparatus generates broadcasting system mode information that shows each broadcasting system mode of all the broadcasting channels according to a determination result of operation 230.

In operation 250, a video processor for processing a baseband broadcasting signal scans the broadcasting channels with reference to the broadcasting system mode information and decodes a detected broadcasting signal.

In operation 260, a channel map is generated by using the broadcasting system mode information and additional information. The additional information denotes metadata related to a broadcasting channel, such as broadcasting program information or broadcasting station information, and is obtained by decoding a broadcasting signal. The channel map is information in which the broadcasting signal receiving apparatus searches for a channel having a broadcasting signal through a channel search process and then maps information related to the channel with a channel number, and is used to rapidly tune a channel when a user changes channel.

As such, according to an embodiment of the present invention, a broadcasting system mode is determined from the IF broadcasting signal, a channel scan is performed with respect to the baseband broadcasting signal according to the determination result, and thus, the time to perform the channel scan is shortened compared to prior technology.

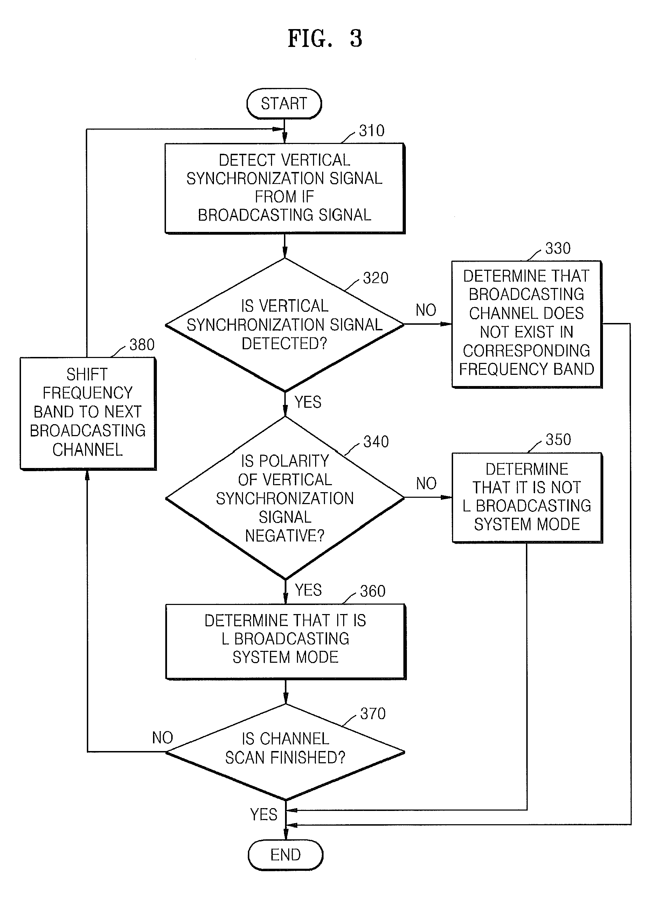

FIG. 3 is a flowchart for describing a process of determining broadcasting system modes of all broadcasting channels, according to an embodiment of the present invention.

In operation 310, a broadcasting signal receiving apparatus detects a vertical synchronization signal from an IF broadcasting signal.

In operation 320, the broadcasting signal receiving apparatus determines whether the vertical synchronization signal is detected from the IF broadcasting signal.

In operation 330, if the vertical synchronization signal is not detected in operation 320, it is determined that a broadcasting channel does not exist in the corresponding frequency band.

In operation 340, if the vertical synchronization signal is detected in operation 320, it is determined whether a polarity of the detected vertical synchronization signal is negative.

In operation 350, if a polarity of the detected vertical synchronization signal is determined to be positive in operation 340, it is determined that the broadcasting channel of the corresponding frequency band is not an L broadcasting system mode. In operation 360, if the polarity of the vertical synchronization signal is determined to be negative in operation 340, it is determined that the broadcasting channel of the corresponding frequency band is the L broadcasting system mode.

In operation 370, it is determined whether scan of all broadcasting channels existing in a predetermined frequency band is finished.

In operation 380, if scanning of all the broadcasting channels is determined to be not finished in operation 370, the frequency band is shifted to the next broadcasting channel, and operations 320 through 370 are repeated.

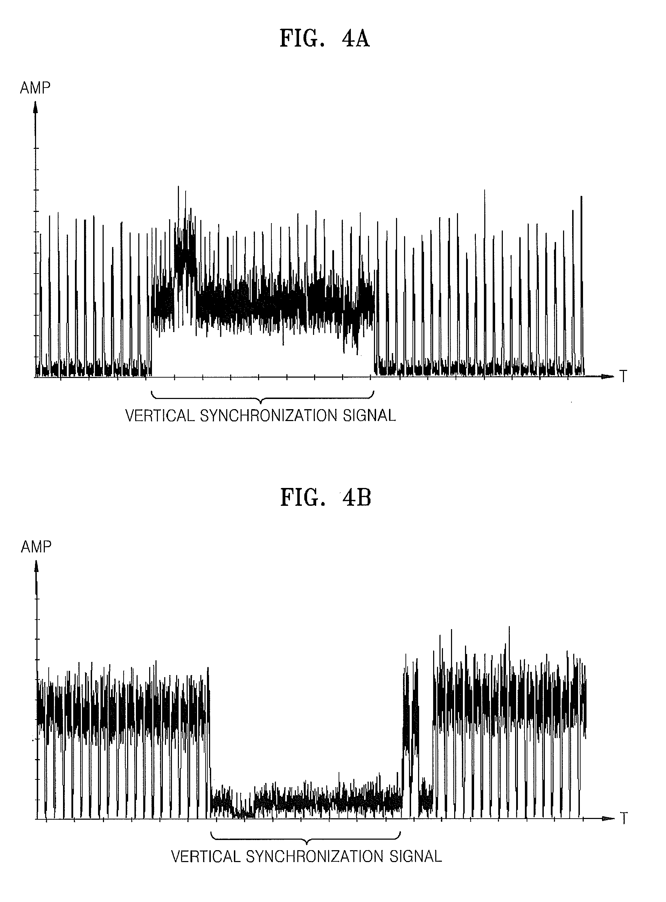

FIG. 4A is a graph illustrating a vertical synchronization signal pattern of a sequentiel couleur a memoire (SECAM)-L broadcasting signal, according to an embodiment of the present invention. As illustrated in FIG. 4A, a broadcasting signal using an L broadcasting system uses a vertical synchronization signal having a negative polarity.

FIG. 4B is a graph illustrating a vertical synchronization signal pattern of a phase alternation by line (PAL)-BG broadcasting signal, according to an embodiment of the present invention. As illustrated in FIG. 4B, other broadcasting systems except for the L broadcasting system use a vertical synchronization signal having a positive polarity.

Due to the above difference, in the present invention, since a broadcasting system mode is decided by determining a polarity of the vertical synchronization signal from an IF broadcasting signal, a video processor does not need to perform a channel scan twice in order to determine the broadcasting system mode.

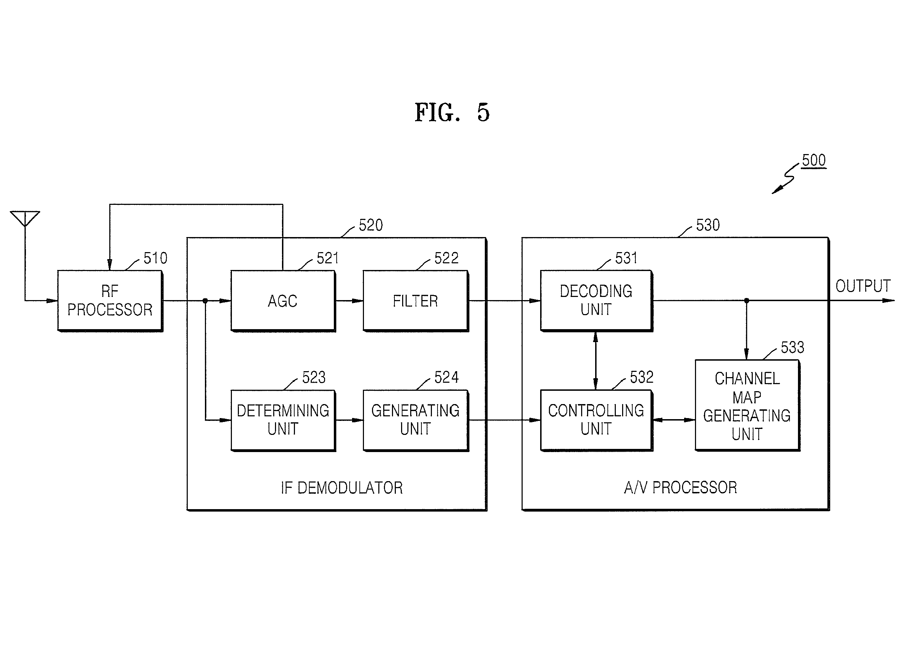

FIG. 5 is a block diagram illustrating a structure of a broadcasting signal receiving apparatus, according to an embodiment of the present invention.

As illustrated in FIG. 5, a broadcasting signal receiving apparatus 500 according to an embodiment of the present invention includes an RF processor 510, an IF demodulator 520, and an audio/video (A/V) processor 530.

The RF processor 510 frequency-converts a received RF broadcasting signal to output an IF broadcasting signal.

The IF demodulator 520 processes the IF broadcasting signal that is output from the RF processor 510 and outputs a baseband broadcasting signal. As illustrated in FIG. 5, the IF demodulator 520 includes an auto gain control (AGC) 521, a filter 522, a determining unit 523, and a generating unit 524.

The AGC 521 allows the output signal to have a constant voltage by automatically adjusting a gain according to changes of the input IF broadcasting signal. The filter 522 lowpass filters the signal that is output through the AGC 521 to output the baseband broadcasting signal.

The determining unit 523 determines broadcasting system modes of all broadcasting channels existing in a predetermined frequency band from the IF broadcasting signal that is output from the RF processor 510. As described above, when a polarity of the vertical synchronization signal included in the IF broadcasting signal is negative, the determining unit 523 determines that the broadcasting system mode of the corresponding broadcasting channel is an L type. On the other hand, when a polarity of the vertical synchronization signal included in the IF broadcasting signal is positive, the determining unit 523 determines that the broadcasting system mode of the corresponding broadcasting channel is not an L type.

When the vertical synchronization signal is not detected from the IF broadcasting signal, the determining unit 523 determines that the broadcasting channel does not exist in the corresponding frequency band.

The generating unit 524 generates broadcasting system mode information showing broadcasting system modes with respect to broadcasting channels according to the determination result of the determining unit 523.

The broadcasting system mode information may show three states. For example, it may show that a vertical synchronization signal having a negative polarity is included in the IF broadcasting signal, a vertical synchronization signal having a positive polarity is included in the IF broadcasting signal, or a vertical synchronization signal is included in the IF broadcasting signal.

The three states may show that the broadcasting system mode of the corresponding broadcasting channel is an L type or not an L type, or may show that the broadcasting channel does not exist in the corresponding frequency band.

In FIG. 5, the IF demodulator 520 includes the determining unit 523 and the generating unit 524, but may include different chips according to an implementation method.

The A/V processor 530 is a module that processes baseband audio and video signals. As illustrated in FIG. 5, the A/V processor 530 includes a decoding unit 531, a controlling unit 532, and a channel map generating unit 533.

The decoding unit 531 decodes the baseband broadcasting signal using the broadcasting system mode information generated in the generating unit 524. That is, the decoding unit 531 may know polarities of video signals of all broadcasting channels with reference to broadcasting system mode information, without directly scanning the video signals having positive and negative polarities.

The channel map generating unit 533 generates a channel map by using the additional information obtained by decoding the broadcasting signal in the decoding unit 531 and the broadcasting system mode information generated in the generating unit 524. As described above, the additional information denotes metadata related to the broadcasting channel, such as broadcasting program information or broadcasting station information. The channel map denotes information in which the broadcasting signal receiving apparatus 500 searches for all the broadcasting channels and then maps information related to the broadcasting channels with a channel number, and is used to rapidly tune a channel when a user changes the channel.

The controlling unit 532 controls the A/V processor 530 so that the channel map generating unit 533 functions by using the broadcasting system mode information. In FIG. 5, the A/V processor 530 includes the channel map generating unit 533, but may include a different chip according to an implementation method.

As such, according to the analog broadcasting signal receiving apparatus 500, since video polarities of all broadcasting channels, that is, broadcasting system modes are determined during an IF demodulation process, an A/V processor does not need to determine the video polarities, thus a channel search process may be finished by performing just one channel scan.

The present invention can also be embodied as computer readable codes on a computer readable recording medium. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, optical data storage devices, and etc. The computer readable recording medium can also be distributed over network coupled computer systems so that the computer readable code is stored and executed in a distributed fashion.

While the present invention has been particularly shown and described with reference to exemplary embodiments thereof, it will be understood by one of ordinary skill in the art that various changes in form and details may be made therein without departing from the spirit and scope of the present invention as defined by the following claims. The preferred embodiments should be considered in a descriptive sense only and not for purposes of limitation. Therefore, the scope of the invention is defined not by the detailed description of the invention but by the appended claims, and all differences within the scope will be construed as being included in the present invention.

## Claims

1. A method of processing an analog broadcasting signal, performed by a broadcasting signal receiving apparatus, the method comprising;
determining broadcasting system modes of all broadcasting channels existing in a predetermined frequency band, on the basis of an intermediate frequency (IF) broadcasting signal that is frequency-converted from a radio frequency (RF) broadcasting signal;
generating broadcasting system mode information showing the broadcasting system modes with respect to the broadcasting channels according to a result of the determining; and
decoding a baseband broadcasting signal with reference to the generated broadcasting system mode information.

2. The method of claim 1, wherein the broadcasting system mode information shows that a vertical synchronization signal having a positive polarity is included in the IF broadcasting signal, a vertical synchronization signal having a negative polarity is included in the IF broadcasting signal, or a vertical synchronization signal is not included in the IF broadcasting signal.

3. The method of claim 1, wherein the determining of the broadcasting system modes comprises determining the broadcasting system modes with respect to the broadcasting channels according to a polarity of the vertical synchronization signal included in the IF broadcasting signal.

4. The method of claim 3, wherein the determining of the broadcasting system modes comprises determining that when the vertical synchronization signal included in the IF broadcasting signal is negative, the broadcasting system mode is an L type.

5. The method of claim 1, further comprising generating a channel map with respect to the broadcasting channels by using the broadcasting system mode information and additional information that is obtained as a result of the decoding.

6. A broadcasting signal receiving apparatus for processing an analog broadcasting signal, the apparatus comprising:
a determining unit for determining broadcasting system modes of all broadcasting channels existing in a predetermined frequency band, on the basis of an IF broadcasting signal that is frequency-converted from an RF broadcasting signal;
a generating unit for generating broadcasting system mode information showing the broadcasting system modes with respect to the broadcasting channels according to a result of the determining; and
a decoding unit for decoding a baseband broadcasting signal with reference to the generated broadcasting system mode information.

7. The apparatus of claim 6, wherein the broadcasting system mode information shows that a vertical synchronization signal having a positive polarity is included in the IF broadcasting signal, a vertical synchronization signal having a negative polarity is included in the IF broadcasting signal, or a vertical synchronization signal is not included in the IF broadcasting signal.

8. The apparatus of claim 6, wherein the determining unit determines the broadcasting system modes with respect to the broadcasting channels according to a polarity of the vertical synchronization signal included in the IF broadcasting signal.

9. The apparatus of claim 8, wherein the determining unit determines that when the vertical synchronization signal included in the IF broadcasting signal is negative, the broadcasting system mode is an L type.

10. The apparatus of claim 6, further comprising a channel map generating unit generating a channel map with respect to the broadcasting channels by using the broadcasting system mode information and additional information that is obtained as a result of the decoding.

11. A computer readable recording medium having embodied thereon a computer program for executing the method of claim 1.
